# EUROPÄISCHE PATENTSCHRIFT

(11) **EP 2 847 965 B1**
(45) Veröffentlichungstag und Bekanntmachung des Hinweises auf die Patenterteilung: **28.10.2020**
(21) Anmeldenummer: 13718600.3
(22) Anmeldetag: 30.04.2013
(51) Int. Cl.: H04L 29/06

(54) **VERFAHREN ZUR ÜBERTRAGUNG VON DATEN IN EINEM PAKETORIENTIERTEN KOMMUNIKATIONSNETZWERK UND ENTSPRECHEND EINGERICHTETES TEILNEHMERGERÄT AN DEM KOMMUNIKATIONSNETZWERK**
METHOD OF TRANSMISSION OF DATA IN A PACKET ORIENTED COMMUNICATIONS NETWORK AND CORRESPONDING SUBSCRIBER EQUIPMENT ON A COMMUNICATIONS NETWORK
PROCÉDÉ DE TRANSMISSION DE DONNÉES DANS UN RÉSEAU DE COMMUNICATION ORIENTÉ PAQUET ET ÉQUIPEMENT UTILISATEUR CORRESPONDANT SUR UN RÉSEAU DE COMMUNICATION

(30) Priorität: 11.05.2012 DE 102012207952
(43) Veröffentlichungstag der Anmeldung: 18.03.2015
(73) Patentinhaber: Continental Automotive GmbH, 30165 Hannover (DE)
(72) Erfinder: NÖBAUER, Josef, 92445 Neukirchen-Balbini (DE); ZINNER, Helge, 98646 Straufhain (DE)
(86) Internationale Anmeldenummer: PCT/EP2013/058974
(87) Internationale Veröffentlichungsnummer: WO 2013/167424

(56) Entgegenhaltungen:
- EP-A2- 1 193 920
- US-B2- 8 060 615
- "IEEE Standard for Layer 2 Transport Protocol for Time Sensitive Applications in a Bridged Local Area Network;IEEE Std 1722-2011", IEEE STANDARD, IEEE, PISCATAWAY, NJ, USA, 6. Mai 2011 (2011-05-06), Seiten 1-57, XP017694503, ISBN: 978-0-7381-6549-3
- HOLZINGER AXEL ET AL: "Realtime Linear Audio Distribution Over Networks: A Comparison of Layer 2 and 3 Solutions Using the Example of Ethernet AVB and RAVENNA", CONFERENCE: 44TH INTERNATIONAL CONFERENCE: AUDIO NETWORKING; NOVEMBER 2011, AES, 60 EAST 42ND STREET, ROOM 2520 NEW YORK 10165-2520, USA, 18. November 2011 (2011-11-18), XP040567695,
- ANDREAS KERN ET AL: "Accuracy of Ethernet AVB time synchronization under varying temperature conditions for automotive networks", DESIGN AUTOMATION CONFERENCE (DAC), 2011 48TH ACM/EDAC/IEEE, IEEE, 5. Juni 2011 (2011-06-05), Seiten 597-602, XP031927788, ISBN: 978-1-4503-0636-2
- "DRAFT IEEE Standard for Local and Metropolitan Area Networksâ Virtual Bridged Local Area Networksâ Amendment 9: Stream Reservation Protocol (SRP) ; 802-1qat-d1-3-dis", IEEE DRAFT; 802-1QAT-D1-3-DIS, IEEE-SA, PISCATAWAY, NJ USA, Bd. 802.1, Nr. d1-3-dis, 5. August 2008 (2008-08-05), Seiten 1-56, XP017638158, [gefunden am 2008-08-05]
- AUDIO/VIDEO BRIDGING LAYER2 TRANSPORT WORKING GROUP OF THE IEEE COMPUTER SOCIETY MICROPROCESSORS AND MICROCOMPUTERS (C/MSC): "Draft Standard for Layer 2 Transport Protocol for Time Sensitive Applications in Bridged Local Area Networks ; avbtp-bartky-p1722-v1-1-cb-2008-08-25", IEEE DRAFT; AVBTP-BARTKY-P1722-V1-1-CB-2008-08-25, IEEE-SA, PISCATAWAY, NJ USA, Bd. 1722, 25. August 2008 (2008-08-25), Seiten 1-84, XP068047620, [gefunden am 2008-08-25]

## Beschreibung

Die Erfindung betrifft ein Verfahren zur Übertragung von Daten in einem paketorientierten Kommunikationsnetzwerk nach einem Ether-AVB-Standard IEEE 802.1BA mit einer garantierten maximalen Übertragungszeit der Datenpakete in dem Kommunikationsnetzwerk eines Kraftfahrzeugs. Im Rahmen dieses Verfahrens ist vorgesehen, dass vor einer : Datenübertragung : mittels einer Reservierungsanfrage von dem Sender der Daten zu einem Empfänger der Daten eine gewisse Dienstgüte reserviert wird, wobei die Reservierungsanfrage als Parameter der angeforderten Dienstgüte die Datenrate des Datenstroms und die Latenz, d. h. die maximale garantierte Übertragungszeit, neben ggf. noch weiteren Parametern um-Das Verfahren ist durch Anspruch 1 definiert.

Gerade die Latenz- und die Übertragungszeiten spielen bei der Übertragung von zeitkritischen Daten in einem auch verkürzend als Netzwerk bezeichneten Kommunikationsnetzwerk eine bedeutsame Rolle, bei dem es sich um ein Ethernet-Netzwerk nach einem Ethernet-Transportprotokoll handelt.

Mit zunehmendem Interesse wird in diesem Zusammenhang der neue Ethernet-AVB-Standard (IEEE 802.1BA) für den Einsatz auch in Kraftfahrzeugen untersucht, welcher im Gegensatz zu einem Standard-Ethernet-Transportprotokoll Garantien für die maximale Übertragungszeit von Datenpaketen garantieren kann. Ethernet-AVB-Daten können mit dem IEEE 1722- oder dem IEEE 1733-Transportprotokoll übertragen werden, wobei ein Ethernet-AVB-Netzwerk auch als AVB-Wolke bezeichnet wird, innerhalb derer die Garantien ausgegeben werden. Im Rahmen der Standard Ethernet-AVB-Konfiguration dürfen zwei als Sender und Empfänger bezeichnete Netzwerkknoten, zwischen denen Daten ausgetauscht werden, innerhalb einer solchen AVB-Wolke maximal 7 Hops auseinander liegen. Als Hop wird dabei die Übertragung des Datenstroms von einem zu einem nächsten Teilnehmergerät im Kommunikationsnetzwerk bezeichnet, wobei die Teilnehmergeräte nicht nur der Sender und der Empfänger des Datenstroms, sondern auch als Switches bezeichnete Zwischenspeicher sein können, die einen Datenstrom empfangen, zwischenspeichern und zur Weiterleitung an den eigentlichen Empfänger wieder aussenden, wobei natürlich jeder Hop Übertragungszeit kostet. Aus diesem Grunde sind innerhalb des Ethernet-AVB-Standards maximal 7 solcher Zwischenübertragungen bis zu dem endgültigen Empfänger erlaubt.

Bevor die Daten über eine spezielle Kommunikationsverbindung, auch Kommunikationsroute oder Weg genannt, übertragen werden, wird mittels der von dem Sender ausgehenden Reservierungsanfrage an den Empfänger eine gewisse Dienstgüte der Kommunikationsverbindung, deren Latenz und Datenrate, reserviert. Dazu werden zum Beispiel im Rahmen des Ethernet-AVB-Standards sogenannte MSRP-Nachrichten (Multiple Stream Reservation Protocol) durch das IEEE 802.1Qat-Protokoll von dem auch als Talker bezeichneten Sender zu dem auch als Listener bezeichneten Empfänger über maximal 6 Switches, d. h. 7 Hops, übertragen. Diese auch als Signalisierungsnachrichten bezeichneten Reservierungsanfragen enthalten neben Parametern zur Datenrate des Datenstroms auch eine sogenannte AVB- oder QoS-Klasse, wobei im Rahmen des Ethernet-AVB-Standards zwei Klassen (Klasse A und Klasse B) vorgesehen sind. Klasse A garantiert eine maximale Übertragungszeit (Latenz) vom Sender zum Empfänger von 2 ms. Klasse B dagegen garantiert eine maximale Übertragungszeit von 50 ms. Weitere Klassen sind in dem Standard derzeit nicht vorgesehen.

Die ausgesendeten Reservierungsanfragen werden über die Switches bis zu dem Empfänger weitergeleitet, der die Reservierungsanfrage bearbeitet und im Falle einer positiven Prüfung bestätigt. Die Bestätigung der Reservierungsanfrage wird dann von dem Sender über die Switches zu dem Empfänger zurückgeleitet, der daraufhin die Daten entsprechend der in der Reservierungsanfrage angeforderten Dienstgüte aussendet.

Abhängig von der AVB-Klasse wird den eigentlichen Daten in dem zur Datenübertragung verwendeten Datenpaket in dem Kopf (Header) des Datenpaketes eine Verwendungszeit (Presentationtime) zugeordnet und mit übertragen, die je nach Klasse die in dem synchronisierten AVB-Ethernet-Kommunikationsnetzwerk bestimmte Zeit enthält, zu denen ein Empfänger die Daten auswerten darf. Dabei wird die je nach Klasse festgelegte maximale Übertragungszeit berücksichtigt, so dass als Verwendungszeit üblicherweise die aktuelle Systemzeit zzgl. der maximalen Übertragungszeit je nach AVB-Klasse, d. h. 2 ms für Klasse A oder 50 ms für Klasse B mitgegeben wird. Hierdurch wird innerhalb des synchronisierten Kommunikationsnetzwerks erreicht, dass alle durch Geräte innerhalb der AVB-Wolke empfangenen Daten gleichzeitig verwenden können, wenn ein synchronisierter Betrieb mehrerer Teilnehmergeräte des Netzwerks erforderlich ist.

Da die verschiedenen Teilnehmergeräte je nach Topologie des Netzwerks und Länge der Kommunikationsverbindung, d. h. insbesondere Anzahl der Hops, die Datenpakete zu unterschiedlichen Zeiten empfangen, müssen die Daten bis zur vorgesehenen Verwendung zur Verwendungszeit intern zwischengespeichert werden, was je nach Datentyp einen nicht unbeträchtlichen Speicher in den Teilnehmergeräten des Kommunikationsnetzwerks erfordert. Da im Gegensatz zu Produkten in typischen IT-Umgebungen gerade bei einem Einsatz in Automobilnetzwerken auf Kosten optimierte Teilnehmergeräte eingesetzt werden sollen, verteuert ein großer notwendiger Speicher in den Teilnehmergeräten diese Geräte unnötig.

Ein weiterer Kostenpunkt im Rahmen dieser Netzwerke ist die Kommunikationsleistung der Switches, welche die Datenströme empfangen, zwischenspeichern und wieder aussenden. Hierzu sind in den Switches als Queues bezeichnete Abarbeitungsstapel vorgesehen, in welche die Daten eingestellt und nacheinander zur Wiederausendung abgearbeitet werden. Um eine unterschiedliche Priorisierung der Daten zu erreichen, sind in den Switches meist mehrere, häufig vier, verschiedene Queues unterschiedlicher Priorität vorgesehen, die im Falle anliegender Daten verschieden viel Sendezeit erhalten, so dass Daten aus der Queue mit der höheren Priorität schneller ausgesendet werden als Daten aus der Queue mit niedrigerer Priorität. Daten, die im Rahmen des Ethernet-AVB-Standards abgearbeitet werden, kommen aufgrund der durch den Ethernet-AVB-Standard garantierten maximalen Übertragungszeit meist in die Queue mit einer höheren Priorität, damit diese vor anderen Daten bevorzugt bearbeitet werden. Hierbei werden die Netzwerktopologie und insbesondere die Lage von Sender und Empfänger in dem Netzwerk jedoch nicht berücksichtigt, die insbesondere unterschiedlich viele Hops voneinander entfernt sein können.

Die US 2010/0080111 A1 offenbart ein Verfahren zum Ethernet-Switching von Audio/Video-Daten beispielsweise mittels eines Ethernet-AVB-Transportprotokolls, bei dem die Verbindungslänge der Audio/Video-Systeme berücksichtigt wird und die Sendeempfänger der Bitübertragungsschicht (PHY) entsprechend der in der Regel verglichen mit üblichen Ethernet-Netzwerken kurzen Verbindungslängen dynamisch konfiguriert werden, beispielsweise um diese an ein Rauschen im Netzwerk anzupassen, das insbesondere bei kurzen Verbindungslängen weniger stark ist. Durch diese Konfiguration ist es möglich, günstigere Sendeempfänger einzusetzen. Dabei setzt das Übertragungsverfahren jedoch auf den jeweiligen Standards auf und bringt keine zeitsparende und/oder ressourcenschonende Übertragung der Daten in dem Netzwerk.

In der WO 2006/110960 A1 wird ein Verfahren zur Übertragung digitaler Daten, insbesondere Video- und/oder Audiodaten, über beispielsweise ein Ethernet-Netzwerk beschrieben, wobei die an der Kommunikation teilnehmenden Geräte auf eine lokale Zeit synchronisiert werden. Alle über das Netzwerk ausgetauschten Datenpakte sind mit einem Zeitstempel versehen, so dass die Datenpakete anhand des Zeitstempels ggf. sortiert werden können. Es ist auch möglich, das Abspielen der Datenpakte bis zu einem gemeinsamen Zeitpunkt zu verzögern oder bestimmte Abspielzeitpunkte vorzugeben. Innerhalb eines QoS-Service können die Synchronisationsdaten bevorzugt transportiert werden, um eine möglichst schnelle Synchronisation über das gesamte Netzwerk zu erreichen. Hierbei kann es aber zu Problemen kommen, wenn die bevorzugten Transportwege überlastet sind durch Anwendungen, die für das Erreichen der Latenz den bevorzugten Transportweg gar nicht benutzen müssten.

Die US8060615B2 offenbart eine Sprechervorrichtung, die Sprecherregistrierungen an Brücken einer Netzwerkdomäne für einen Strom ausgeben kann, wobei die Sprecherregistrierung mindestens eine Bandbreitenanforderung und einen Status der Sprecherregistrierung als entweder anbietet oder als nicht bestanden aufweist.

Der Standard "IEEE Standard for Layer 2 Transport Protocol for Time Sensitive Applications in a Bridged Local Area Network" (IEEE Std 1722-2011) und der Draft-Standard "DRAFT IEEE Standard for Local and Metropolitan Area Networks Virtual Bridged Local Area Networks Amendment 9: Stream Reservation Protocol (SRP)" (802-1qat-d1-3-dis) offenbaren wie die an der Kommunikation teilnehmenden Geräte synchronisiert werden können.

In dem Artikel "Realtime Linear Audio Distribution Over Networks: A Comparison of Layer 2 and 3 Solutions Using the Example of Ethernet AVB and RAVENNA" (Holzinger, Axel et al, 44th international conference: audio networking) werden ein L2-Netwerk und ein L3-Netwerk mit einander verglichen.

Der Artikel "Accuracy of Ethernet AVB time synchronization under varying temperature conditions for automotive networks" (Andreas Kern et al, Design automation conference (dac), 2011 48^{th}) offenbart wie bei Ethernet AVB die an der Kommunikation teilnehmenden Geräte unter wechselnden Temperaturbedingungen synchronisieren.

Vor diesem Hintergrund ist es Aufgabe der Erfindung, bei einer Datenübertragung der eingangs genannten Art eine Möglichkeit vorzuschlagen, die innerhalb eines Kommunikationsnetzwerks, eines Kommunikationsnetzwerks mit einem Ethernet-AVB-Transportprotokoll, bestehenden Kommunikationsverbindungen effektiver und ressourcensparender zu verwenden.

Diese Aufgabe wird erfindungsgemäß durch ein Verfahren mit den Merkmalen des Anspruchs 1 gelöst. Die Erfindung wird als ein Verfahren gemäß dem Anspruch 1, ein Computerprogrammprodukt gemäß dem Anspruch 7, 9, und ein Kommunikationsnetzwerk gemäß dem Anspruch : 8 definiert; die abhängigen Ansprüche definieren entsprechende Ausführungsbeispiele.

Dabei ist vorgesehen, eine Verwendungszeit durch den Sender auf Basis der Topologie des Netzwerks und/oder der Ressourcen der Kommunikationsverbindung anzupassen, wobei die Verwendungszeit angibt, ab wann die in dem Datenstrom über das Kommunikationsnetzwerk übertragenen Daten in dem Empfänger genutzt werden dürfen. Dies bedeutet, dass der Sender vor dem Aussenden des Datenstroms nach Empfang einer Bestätigung einer Reservierungsanfrage aufgrund der Gegebenheiten der gewählten Kommunikationsverbindung (Route) überprüft, welche Verwendungszeit der Daten tatsächlich benötigt wird, bevor diese an den Empfänger ausgesendet werden.

Hierdurch lassen sich die begrenzten Ressourcen des Kommunikationsnetzwerks effektiver und an die tatsächlichen Anforderungen des konkret gewählten Kommunikationsweges Route) angepasst nutzen, so dass die Teilnehmergeräte ggf. mit kostengünstigeren Bauteilen, d. h. weniger leistungsfähigen Chips und/oder Speichermodulen, ausgestattet werden können.

Als Parameter der wird eine Verwendungszeit angepasst , die angibt, ab wann die in dem Datenstrom über das, vorzugsweise synchronisierte, Kommunikationsnetzwerk übertragenen Daten in dem Empfänger genutzt werden dürfen. Diese Verwendungszeit kann insbesondere an die Länge der Kommunikationsverbindung zwischen Sender und Empfänger angepasst werden, so dass hier eine der tatsächlichen Übertragungszeit, und nicht der maximal garantierten Übertragungszeit, angepasste Verarbeitungszeit (Presentation time) vorgeschlagen werden kann, die eine weniger lange Zwischenspeicherung in dem Speicher des Empfängers benötigt.

Eine solche Synchronisation des Kommunikationsnetzwerks kann auch nur in einem Teil des Kommunikationsnetzwerks vorliegen, der sich entlang der Kommunikationsverbindung (Route) von dem Sender zu dem Empfänger (das heißt ggf. auch über die Switches zum Weiterleiten des Datenstroms) ergibt. Hierdurch wird eine beispielsweise gleichzeitige Verarbeitung von an zwei Empfänger ausgesendeten Datenpaketen ermöglicht, ohne dass das gesamte Kommunikationsnetzwerk synchronisiert und synchron gehalten werden muss. Natürlich kann es gerade bei der Anwendung in einem Automobil auch vorteilhaft sein, das gesamte Kommunikationsnetzwerk synchron zu halten, zumal in einem Kraftfahrzeug meist eine überschaubare Anzahl von Teilnehmergeräten des Kommunikationsnetzwerks vorliegt.

Durch die erfindungsgemäße Anpassung der Verwendungszeit kann also neben der Reduzierung des notwendigen Speichers in dem Empfänger auch insgesamt eine Verkürzung der Latenz durch die Datenübertragung erreicht werden, da die Weiterverarbeitungszeit der Daten dem Kommunikationsnetzwerk flexibel angepasst werden kann, ohne dass jeweils die maximal garantierte Übertragungszeit abgewartet werden muss. Insbesondere bei kurzen Kommunikationsverbindungen, d. h. kurzen Übertragungswegen bzw. Routen, kann somit eine auf den Einzelfall abgestimmte, schnelle Datenübertragung bis zu einer Verwendung der übertragenen Daten erreicht werden.

Gemäß einer bevorzugten Weiterentwicklung der vorgeschlagenen Erfindung kann zusätzlich, als Parameter der Dienstgüte des Datenstroms eine Dienstgüte-Klasse angepasst werden, welche insbesondere die Art der Weiterleitung des Datenstroms zwischen dem Sender und dem Empfänger über die zwischengeschalteten Switches definiert, d. h. insbesondere die Weiterleitungsgeschwindigkeit in den Switches vorgibt. Dabei kann die Dienstgüte-Klasse erfindungsgemäß dafür ausschlaggebend sein, in welche Queue mit welcher Priorisierung die Datenströme eingestellt und weitergeleitet werden. Hierbei kann vorgesehen sein, dass die Dienstgüte-Klasse und damit die Priorisierung des Datenstroms mit der Länge der Kommunikationsverbindung des Datenstroms ansteigt, da die Datenpakete aufgrund der physikalischen Gegebenheiten in auf einem langen Übertragungsweg länger brauchen als Daten auf einem kurzen Übertragungsweg (Route), so dass diese Daten auch mit niedrigerer Priorität übertragen werden können, um beispielsweise innerhalb derselben oder eine vergleichbaren Übertragungszeit bei dem Empfänger einzutreffen.

Bei einem Kommunikationsweg kann auch vorgesehen werden, dass die Kommunikationsverbindung zwischen dem Sender und dem Empfänger über mindestens einen Switch oder ggf. mehrere Switches mittels jeweils eines Hops erfolgt. Dabei empfängt ein Switch den Datenstrom, stellt ihn entsprechend einer beispielsweise durch die Dienstgüte-Klasse definierte Priorisierung in eine Queue des Switches ein, wobei der Datenstrom zur Weiterverarbeitung insbesondere in einem internen Speicher des Switches gespeichert wird, und sendet diesen Datenstrom bei der Abarbeitung der Queue wieder aus. Erfindungsgemäß wird dabei nun vorgeschlagen, dass der Switch der durch den Sender ausgesendeten Reservierungsanfrage und/oder der Bestätigung der Reservierungsanfrage durch den Empfänger Informationen über die Netzwerktopologie und/oder die Ressourcen des Switches einfügt, so dass diese Informationen über die Netzwerktopologie und/oder die Ressourcen des Switches bzw. jedes entlang des Kommunikationsweges verwendeten Switches mit der Bestätigung der Reservierungsanfrage an den Sender übermittelt werden, der dann auf Grundlage der übermittelten Informationen über die Netzwerktopologie und/oder die Ressourcen des bzw. der Switches die Verwendungszeit entsprechend anpasst. Somit erhält der Sender jeweils aktuelle Informationen über die Art und aktuelle Leistungsfähigkeit der Kommunikationsverbindung, die dann bei der Aussendung des Datenstroms berücksichtigt werden können.

In einer besonders bevorzugten Ausführungsform des erfindungsgemäß vorgeschlagenen Verfahrens werden als Information über die Netzwerktopologie die Anzahl der Hops, d. h. die Anzahl der Weiterleitungen des Datenstroms über einen Switch, zwischen dem Sender und dem Empfänger entlang der Kommunikationsverbindung gezählt. Sofern wie vorbeschrieben jeder Switch der Reservierungsanfrage und/oder der Bestätigung der Reservierungsanfrage Informationen über die Netzwerktopologie und/oder die Ressourcen des Switches einfügt, kann jeder Switch dazu entlang des Kommunikationsweges bzw. der Kommunikationsverbindung einfacher Weise einen Hop-Zähler hochzählen, bis die Reservierungsanfrage den Empfänger erreicht. Diese Information wird dann mit der Bestätigung der Reservierungsanfrage an den Sender zurückgeschickt der damit ein Maß für die Länge des Kommunikationsweges hat. Alternativ oder zusätzlich kann auch jeder Switch der Reservierungsanfrage und/oder der Bestätigung der Reservierungsanfrage eine Identifikation anfügen, aus welcher der Sender die Anzahl der Hops entlang des Kommunikationsweges zählen kann und ggf. weiter vorliegende Informationen über den Switch auswerten kann, da damit der für die Weiterleitung des Datenstroms verwendete Switch bekannt und identifiziert ist.

Eine weitere, Möglichkeit liegt darin, bei einem im Wesentlichen statischen Kommunikationsnetzwerk, bei dem die Netzwerkteilnehmer bekannt sind und die Kommunikationsverbindungen (Routen) von einem definierten Sender zu einem definierten Empfänger üblicherweise gleich aufgebaut werden, die Anzahl der Hops auch statisch durch den Sender vorzugegeben, wenn diesem die Topologie des Netzwerks bekannt ist.

Eine weitere Möglichkeit zur Durchführung des Verfahrens sieht vor, dass als Informationen über Ressourcen der Kommunikationsverbindung ein Switch, insbesondere ein jeder Switch, entlang der Kommunikationsverbindung von dem Sender zu dem Empfänger eine Information über die Anzahl der für die Weiterleitung des Datenstroms verwendbaren Queues, deren nominaler Leistung, d. h. insbesondere Angaben über die aktuelle Kapazität der Queues, und/oder den QueueStand, d. h. insbesondere die aktuelle Auslastung der Queues, weitergibt. Der Sender kann dann aufbauend auf diesen Informationen eine geeignete Dienstgüte auswählen, durch Anpassung der Parameter Verwendungszeit (Presentationtime) und möglicherweise der : Dienstgüte-Klasse.

Die Anzahl der für die Weiterleitung des Datenstroms verwendbaren Queues und deren nominaler Leistung eines Switches kann in einem bekannten Netzwerk, d. h. bei bekannter Netzwerktopologie, auch vorab in dem Sender bekannt sein, beispielsweise durch Ablegen in einer geeigneten, vorzugsweise im Netzwerk abrufbaren Tabelle. Gleichwohl ist es möglich, eine Aktualisierung dieser Daten im Rahmen einer Reservierungsanfrage und/oder der Bestätigung auf die Reservierungsanfrage zu erreichen.

Insbesondere in speziellen geschlossenen Systemen, beispielsweise in einem Kraftfahrzeug, in dem eine bestimmte Grundauslastung des Kommunikationsnetzwerkes bekannt ist, können auch fixe Datenströme und deren Ressourcenverbrauch statisch vorgegeben werden, so dass diese durch den Sender in jedem Fall berücksichtigt werden können, auch wenn diese Informationen im Rahmen einer Reservierungsanfrage oder einer dazugehörigen Bestätigung nicht durch die Switches mit übertragen werden. In diesem Zusammenhang kann vorgesehen sein, dass die bekannte Topologie des Netzwerks den Sendern und/oder Empfängern des Kommunikationsnetzwerks bei der Programmierung, vorzugsweise als statische Information, insbesondere während der Einbindung der Kommunikationsteilnehmer in das Netzwerk und/oder bei dem Hochstart des Netzwerkes, zur Verfügung gestellt wird. Die bekannte Topologie kann insbesondere Informationen über mögliche Kommunikationsverbindungen (Routen, Wege), die Entfernung zwischen allen Teilnehmern des Kommunikationsnetzes insbesondere entlang der möglichen Kommunikationsverbindungen, die Entfernung eines Teilnehmers zu allen anderen Teilnehmern, die nominale Leistung der Switches (Queues und Speicherstände der Queues, Anzahl der Queues, fixe Datenströme und deren Ressourcenverbrauch) enthalten. Die Entfernung der möglichen Kommunikationsverbindungen wird vorzugsweise in Anzahl der Hops der Kommunikationsverbindungen gezählt.

In diesem Zusammenhang kann vorgesehen sein, in den Teilnehmergeräten, d. h. insbesondere den als Endknoten bezeichneten Sendern bzw. Empfängern und/oder den Switches, Tabellen als statische Konfiguration anzulegen, d. h. insbesondere den Sendern die Dienstgüte statisch auf Basis der feststehenden Topologie des Netzwerkes mitzuteilen, so dass diese auf Basis der Topologie des Netzwerkes und/oder der Ressourcen der Kommunikationsverbindung die Verwendungszeit anpassen können, auch ohne dass die Switches einzelne Informationen hinzufügen, wie dies ausführlich vorbeschrieben ist. Bevorzugt ist es jedoch, die vorliegenden Informationen durch die Switches dynamisch anpassen zu lassen.

Ferner kann auch vorgesehen sein, dass in dem Kommunikationsnetzwerk eine zentrale Tabelle, beispielsweise in einem zentralen Steuergerät, mit Informationen zu der Topologie des Netzwerkes und/oder den Ressourcen der möglichen Kommunikationsverbindungen geführt wird, wobei Teilnehmergeräte des Kommunikationsnetzwerks die Information an die Tabelle übersenden bzw. dort einstellen und aus der Tabelle auslesen können. Diese dynamisch anpassbaren Zustände können ggf. die aktuellen Queuestände der Switches sein, die die Switches an die zentrale Tabelle im Kommunikationsnetzwerk senden. Somit können die Sender diese Informationen über die Teilnehmergeräte entlang der Kommunikationsverbindung abfragen, ohne dass die Informationen bei jeder Reservierungsanfrage neu ausgesendet werden müssen, was ggf. einen erhöhten Kommunikations- und Datenaufwand erfordert.

Gemäß einer besonders bevorzugten Ausführungsform können auch mehr als zwei Dienstgüte-Klassen vorgesehen sein, wobei jeder Dienstgüte-Klasse insbesondere eine Queue eines Switches mit jeweils einer eigenen Datenrate, d. h. eine Queue mit einer jeweils einer der Dienstgüte-Klasse angepassten Priorität, zugeordnet ist. Auch wenn der derzeitige Standard nur zwei Dienstgüte-Klassen vorsieht, ist eine Änderung des Standards hin zu mehr Dienstgüte-Klassen einfach realisierbar, ggf. auch ohne eine Änderung des Standard als solchem, sofern die die mehreren Dienstgüte-Klassen verwendenden Geräte dies innerhalb eines geschlossenen Netzwerks alle anwenden.

Entsprechend wird auch ein Teilnehmergerät eines erfindungsgemäßen Kommunikationsnetzwerks insbesondere eines Kraftfahrzeugs, betrachtet. Das Teilnehmergerät kann ein Sender, Empfänger und/oder Switch des Kommunikationsnetzwerks sein. Das Teilnehmergerät kann mit einer Sende-Empfangseinrichtung und einer Recheneinheit ausgestattet, wobei die Recheneinheit zur Durchführung einer Kommunikation auf dem Kommunikationsnetzwerk nach einem Kommunikationsprotokoll eingerichtet ist, insbesondere einem Ethernet-AVB-Transportprotokoll.

Eine Recheneinheit kann durch Programmcodemittel ferner zur Durchführung des vorbeschriebenen Verfahrens oder Teilen hiervon eingerichtet werden.

Weitere Vorteile, Merkmale und Anwendungsmöglichkeiten der vorliegenden Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der vorliegenden Erfindung, auch unabhängig von deren Zusammenfassung in den Ansprüchen oder deren Rückbezügen. Es zeigen:
- Fig. 1: ein paketorientiertes Kommunikationsnetzwerk mit Kommunikationsverbindungen gemäß einer Ausführungsform des erfindungsgemäßen Verfahrens;
- Fig. 2: schematisch den zeitlichen Verlauf einer Reservierungsanfrage und einer Bestätigung für ein Kommunikationsnetzwerk gemäß Fig. 1;
- Fig. 3: schematisch den Aufbau eines Headers eines in dem Kommunikationsnetzwerk gemäß Fig.1 versendeten Datenpakets;
- Fig. 4: schematisch den zeitlichen Verlauf der Propagation von Datenpaketen durch das Kommunikationsnetzwerk gemäß Fig. 1;
- Fig. 5: den Speicherzustand von Teilnehmergeräten des Kommunikationsnetzwerks gemäß Fig. 1 vor der Weiterverarbeitung der empfangenen Daten;
- Fig. 6: schematisch das Weiterleiten von Datenpaketen durch Switches in dem Kommunikationsnetzwerk gemäß Fig. 1;
- Fig. 7: den zeitlichen Verlauf der Reservierung und Anpassung der Dienstgüte gemäß einer Ausführungsform der vorliegenden Erfindung und
- Fig. 8: den zeitlichen Verlauf der Reservierung und Anpassung der Dienstgüte gemäß einer weiteren Ausführungsform der vorliegenden Erfindung.

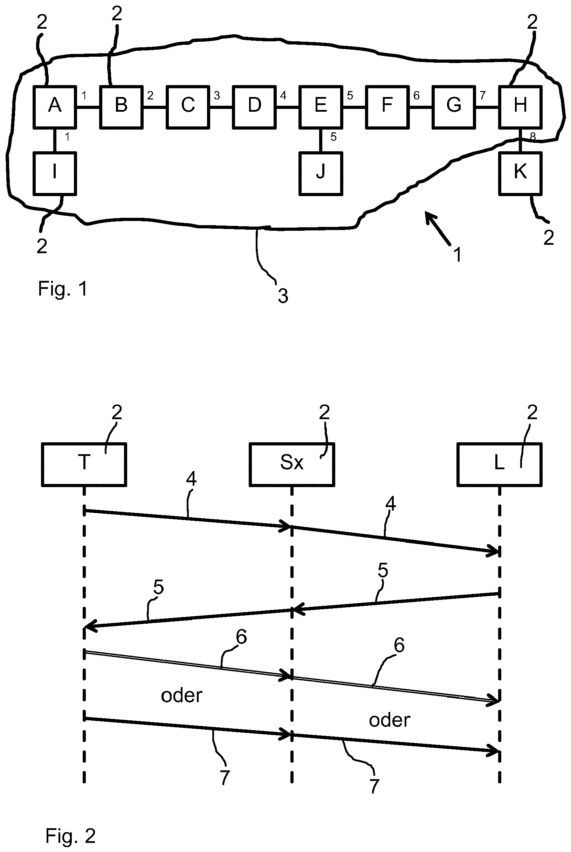

In Fig. 1 ist ein paketorientiertes Kommunikationsnetzwerk 1 dargestellt, das insbesondere nach einem Ethernet-AVB-Standard (IEEE 802.1BA) arbeitet. In dem Kommunikationsnetzwerk 1 sind Netzwerkteilnehmer 2 vorgesehen, die in dem Kommunikationsnetzwerk 1 miteinander verbunden sind und als Sender, Empfänger und/oder Switch zum Weiterleiten eines Datenstroms ausgebildet sein können. Um die einzelnen Netzwerkteilnehmer 2 nachfolgend einzeln benennen zu können, sind diese mit den Großbuchstaben "A" bis "K" gekennzeichnet. Ausgehend von dem in dem beschriebenen Beispiel den Sender A bildenden Netzwerkteilnehmer bzw. Knoten 2 sind die Verbindungen (Hops), die für ein Datenpaket ausgehend von dem Sender A zu den jeweiligen Empfängern notwendig sind, durchnummeriert, wobei zwischen dem Sender A und beispielsweise einem Empfänger H oder K angeordnete Netzwerkteilnehmer 2 als Switches ausgebildet sind, die die empfangenen Datenpakete des Datenstromes empfangen und wieder aussenden.

Entsprechend dem Ethernet-AVB-Standard dürfen zwei Netzwercknoten 2, für die ein Datenpaket in dem Rahmen eines Ethernet-AVB-Standards übertragen werden soll, maximal 7 Zwischenübertragungen, die auch Hops genannt werden, auseinanderliegen. Die von dem Sender A innerhalb dieses Ethernet-AVB-Standards erreichbaren Knoten 2 liegen daher innerhalb der sogenannten AVB-Wolke 3. Für alle innerhalb dieser AVB-Wolke 3 liegenden Teilnehmergeräte 2 wird eine Übertragung innerhalb einer vorgegebenen maximalen Übertragungszeit gewährleistet. Für den Netzwerkteilnehmer 2 mit der Bezeichnung "K" wird diese maximale Übertragungszeit nicht mehr gewährleistet, da hierfür ausgehend von dem Sender "A" insgesamt 7 Hops (Zwischenübertragungen über Switches) notwendig sind.

Datenverbindungen können innerhalb der AVB-Wolke 3 als auch außerhalb der AVB-Wolke 3 sein. Einen bevorzugten Anwendungsfall stellen Ethernet-AVB-Kommunikationsdatennetze innerhalb eines Kraftfahrzeugs dar, in denen alle Netzwerkteilnehmer 2 häufig innerhalb der AVB-Wolke 3 liegen.

Mit Bezug auf Fig. 2 wird nachfolgend der Ablauf der Kommunikation in dem Kommunikationsnetzwerk 1 schematisch dargestellt. Dabei sendet ein als Sender dienender Knoten 2, der in Fig. 2 mit "T" (Talker) gekennzeichnet ist, entweder aufgrund einer eigenen Veranlassung oder aufgrund des Empfangs einer - nicht eingezeichneten - Anfrage durch einen als Empfänger dienenden Knoten 2, der in Fig. 2 als "L" (Listener) gekennzeichnet ist, eine Berechtigungsanfrage 4 aus, die von einem als weiterleitenden Switch dienenden Netzwerkteilnehmer 2 empfangen und weitergeleitet wird. Der Switch wird in Fig. 2 mit dem Buchstaben "S" (Switch) gekennzeichnet, wobei der Buchstabe "x" anzeigt, dass kein, ein oder mehrere Switches S zwischen dem Sender T und dem Empfänger L vorgesehen sein können.

Die Reservierungsanfrage 4, mit welcher der Sender T beispielsweise das Streaming eines Datenstromes anbietet, enthält Parameter wie eine Güteklasse (QoS-Klasse), Datenrate, Rang und/oder Sendefrequenz. Diese Reservierungsanfrage 4 wird von dem Switch S empfangen, der prüft, ob die angeforderten Ressourcen noch zur Verfügung stehen. Bei positiver Prüfung leitet der Switch S die Nachricht (Reservierungsanfrage 4) an den Empfänger L weiter. Dieser antwortet auf das Angebot der Reservierungsanfrage 4 und schickt eine Bestätigung 5 der Reservierungsanfrage 4 zurück, wenn er der Datenstrom empfangen möchte.

Die Switches S entlang der Übertragungsverbindung von dem Sender T zu dem Empfänger L registrieren die Bestätigung 5 der Reservierungsanfrage 4 und reservieren die mit der Reservierungsanfrage 4 angeforderte Güte über Einstellungen in ihren internen Queues, Registern, usw.. Erhält der Sender T daher eine positive Bestätigung seiner Reservierungsanfrage, kann er mit der Übertragung des Datenstroms 6 beginnen, der auf dem reservierten Übertragungsweg über die Switches Sx zu dem Empfänger L übertragen wird.

Die durch den Sender T angeforderte Dienstgüte (QoS) steht aufgrund der Reservierung entlang des Kommunikationsweges (Route, Kommunikationsverbindung) zur Verfügung. Hierdurch wird eine definierte maximale Verzögerung des Datenstroms bei der Übertragung von dem Sender "T" zu dem Empfänger "L", die auch Latenz genannt wird, zugesichert. Falls der Sender 2 keine oder eine negative Bestätigung erhält, sendet er anstelle einer Übertragung 6 des Datenstroms eine Fehlermitteilung 7 aus.

Dieses Vorgehen entspricht einer Datenübertragung nach dem Ethernet-AVB-Standard. In diesem derzeitigen Standard von Ethernet-AVB wird von etwa 250 µs maximaler Verzögerung für die Datenübertragung durch einen Netzwerkknoten (Sender oder Switch) ausgegangen. Bei dem maximal innerhalb einer AVB-Wolke erlaubten acht Netzwerkknoten 2, d. h. einer Übertragung von dem Sender zum Empfänger mit maximal acht Teilnehmern (einschließlich Sender) ergibt sich dabei eine maximale Verzögerung von 2 ms für die AVB-QoS Klasse A, welche die Datenpakete auf ihrem Übertragungswegüber tatsächlich 7 Hops (Verbindungen) durchlaufen unterworfen werden.

Dies soll nachfolgend noch einmal anhand einer Übertragung von Daten in dem in Fig. 1 dargestellten Kommunikationsnetzwerk 1 erläutert werden, wobei die Daten durch den Netzwercknoten 2 mit der Bezeichnung A (Sender T) ausgesendet werden. Empfänger L sollen die Netzwerkknoten 2 mit der Bezeichnung "I" und der Bezeichnung "K" sein, wobei der Netzwerkknoten 2 mit der Bezeichnung "K" außerhalb der AVB-Wolke 3 liegt. Entsprechend des synchron arbeitenden Ethernet-AVB-Standards soll eine zeitlich synchronisierte Verarbeitung der Daten in den Geräten I und K erfolgen.

Beispielsweise können die Geräte I und K (Netzwerkknoten 2) Lautsprecher sein, die zur exakt gleichen Zeit das über das Ethernet-AVB-Kommunikationsnetzwerk 1 übertragene Datensignal wiedergeben sollen, da es ansonsten zu einer Verzerrung der Audiosignale führen würde.

Das Gerät I ist direkt an den Sender (Gerät A) angeschlossen, so dass hierfür eine Übertragung mit nur einem Hop notwendig ist. Damit ist eine Verzögerung von maximal 250 µs verbunden. Das Gerät K markiert das Ende der AVB-Wolke als erstes Gerät, das außerhalb der AVB-Wolke liegt. Hier sind für eine Datenübertragung 8 Knoten ä 250 µs, insgesamt also 2 ms einzuplanen, da die Verzögerung der Daten so lange sein kann.

Wenn die Daten gleichzeitig abgespielt werden sollen, müssen die Daten für die entsprechende Differenz der tatsächlichen Übertragungszeit in dem Gerät I zwischengespeichert werden, bis auch das Gerät K die Daten empfangen hat, so dass die Daten dann zeitgleich verarbeitet, beispielsweise durch die Lautsprecher abgespielt, werden können.

Da alle Geräte innerhalb einer AVB-Wolke 3 aufeinander synchronisiert sind, können auch unterschiedlich weit entfernte Empfänger die erhaltenen Daten zur gleichen Zeit wiedergeben.

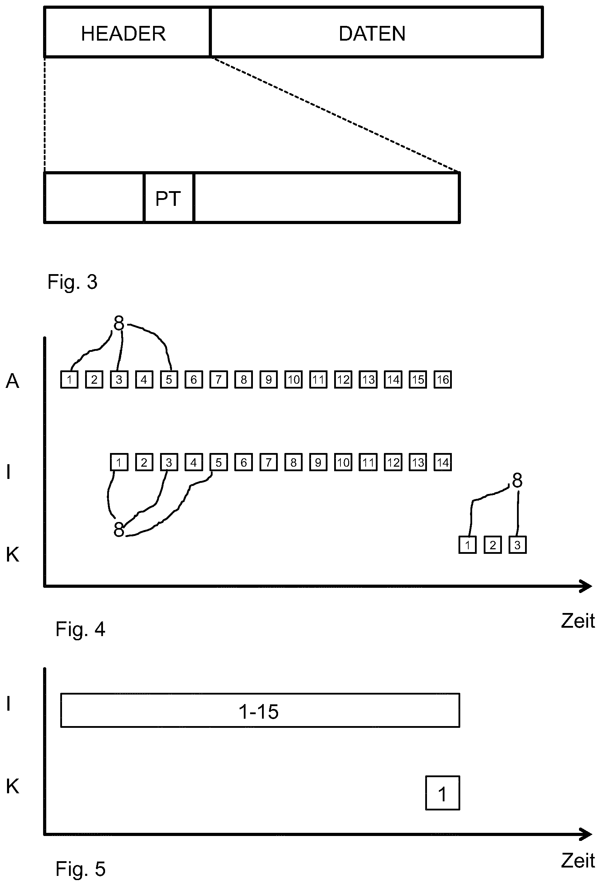

Um dies zu steuern, ist in dem in Fig. 3 dargestellten Datenpaket, das in dem Kommunikationsnetzwerk 1 gemäß dem Ethernet-AVB-Standard oder einem entsprechenden Standard übertragen wird, in einen sogenannten Datenkopf (Header) und einen Datenanteil (Daten) aufgeteilt. In dem Header findet sich neben anderen Informationen, wie Steuerungsdaten für den Kommunikationsablauf und dergleichen, ein Eintrag für eine Verwendungszeit (Presentation time PT) welche angibt, wann die erhaltenen Daten innerhalb der synchronen Zeit der synchronisierten Teilnehmergeräte 2 verwendet werden dürfen.

Da die Datenpakete relativ schnell von dem Gerät A zu dem Gerät I übertragen werden, die Übertragung von dem Gerät A zu dem Gerät K jedoch wesentlich länger dauert, ergibt sich in den Geräten I und K ein unterschiedlicher Speicherbedarf. Dies ist in Fig. 4 veranschaulicht.

Aufgrund der Topologie des Kommunikationsnetzwerks 1 empfangen die verschiedenen Empfänger, im Beispiel die Geräte I und K, die Datenpakete zu unterschiedlichen Zeiten. Wenn das Gerät A insgesamt sechszehn Datenpakete 8 mit einem typischen Sendeabstand von 125 µs aussendet (oberste Zeile von Fig. 3), und die Datenübertragung über einen Knoten 250 µs dauert, erhält das Gerät I zum Zeitpunkt der Aussendung des Datenpakets 3 durch den Sender T (Gerät A) das erste Datenpaket 8. Da der andere Empfänger (Gerät K) acht Hops entfernt ist, erhält dieser das erste Datenpaket 8, das von dem Gerät A ausgesendet wurde, erst zeitlich nach der Aussendung des sechzehnten Datenpakets des Geräts A.

Da die Daten in den Geräten I und K gleichzeitig verarbeitet werden sollen, ist es daher notwendig, in dem Gerät I fünfzehn Datenpakete zu speichern, damit die zu unterschiedlichen Zeiten erhaltenen Datenpakete 8 tatsächlich gleichzeitig verarbeitet werden. Dies verdeutlicht qualitativ auch Fig. 5, die den Speicherbedarf der Geräte I und K über die Zeit zeigt, wobei in Gerät K nur ein Datenpaket, in Gerät I jedoch fünfzehn Datenpakete für den Beispielfall gemäß Fig. 4 zwischengespeichert werden müssen.

Wie die nachfolgende Tabelle zeigt, kann gerade bei der Übertragung von Videodaten hier ein erheblicher Speicherbedarf zustande kommen, der direkt mit den Kosten für die Speicherbausteine und damit die Netzwerkteilnehmer 2 verbunden ist. Die nachfolgende Tabelle 1 stellt die Anzahl der Video-Datenpakete 8 in dem Speicher einem Speicherbedarf in Bytes gegenüber.

**Tabelle 1**

| Datenpakete im Speicher | Speicherbedarf in bytes |
|---|---|
| 1 | 1500 |
| 2 | 3000 |
| 3 | 4500 |
| ... | ... |
| 16 | 24000 |

Aufgrund der durch die AVB-Klassen A bzw. B garantierten maximalen Übertragungszeiten von 2 ms bzw. 50 ms kommt es aber auch vor, dass Datenpakete an einen Empfänger ausgesandt werden und in dem Header des Datenpakets eine Verwendungszeit PT von 2 ms bzw. 50 ms eingetragen wird, entsprechend der garantierten Übertragungszeit, unabhängig davon, wie lange das Datenpaket tatsächlich von dem Sender T zu dem Empfänger L braucht, da innerhalb dieser garantierten Zeiten das Datenpaket in jedem Fall den Empfänger L erreicht hat.

Auch hierdurch kann es zu einem erhöhten Speicherbedarf in dem Empfänger kommen, wenn die Datenpakete deutlich früher bei dem Empfänger eintreffen als sie entsprechend der Verwendungszeit dann verwendet werden dürfen. Dies ist in den nachfolgenden Tabellen 2 und 3 für die Verwendungszeiten 2 ms bzw. 50 ms und die Entfernungen zu dem Empfänger in Hops (Zwischenübertragungen) dargestellt, wobei sowohl die Latenz für die eigentliche Übertragung als Latenzzeit zum Empfänger und die Latenz bis zur Weiterverarbeitung der Daten als Latenzzeit zur Anwendung angegeben sind.

**Tabelle 2**

| Entfernung (Hops) | Verwendungszeit | Latenz zum Empfänger | Latenz zur Anwendung |
|---|---|---|---|
| 1 | 2 ms | 0,25 ms | 2 ms |
| 2 | 2 ms | 0,5 ms | 2 ms |
| 3 | 2 ms | 0,75 ms | 2 ms |
| 4 | 2 ms | 1 ms | 2 ms |
| 5 | 2 ms | 1,25 ms | 2 ms |
| 6 | 2 ms | 1,5 ms | 2 ms |
| 7 | 2 ms | 1,75 ms | 2 ms |
| 8 | 2 ms | 2 ms | 2 ms |

Die Latenz zur Anwendung meint hier die tatsächlich minimale Zeit, bis die Daten weiterverarbeitet werden dürfen. Unabhängig von der Entfernung des Empfängers kann die minimale Latenzzeit zur Anwendung nicht weniger als 2 ms gemäß Klasse A bzw. 50 ms gemäß Klasse B betragen, da andernfalls der Standard nicht eingehalten wird. Im Falle von nur einem Hop zum Empfänger, d. h. einer direkten Übertragung der Daten vom Sender zum Empfänger ohne Zwischenschaltung eines Switches, müssen die Daten in dem Empfänger 1,75 ms (im Falle der Klasse A) bzw. 43,75 ms (im Falle der Klasse B) zwischengespeichert werden, bevor eine Verarbeitung möglich ist.

**Tabelle 3**

| Entfernung (Hops) | Verwendungszeit | Latenz zum Empfänger | Latenz zur Anwendung |
|---|---|---|---|
| 1 | 50 ms | 6,25 ms | 50 ms |
| 2 | 50 ms | 12,5 ms | 50 ms |
| 3 | 50 ms | 18,75 ms | 50 ms |
| 4 | 50 ms | 25 ms | 50 ms |
| 5 | 50 ms | 31,25 ms | 50 ms |
| 6 | 50 ms | 37,5 ms | 50 ms |
| 7 | 50 ms | 43,75 ms | 50 ms |
| 8 | 50 ms | 50 ms | 50 ms |

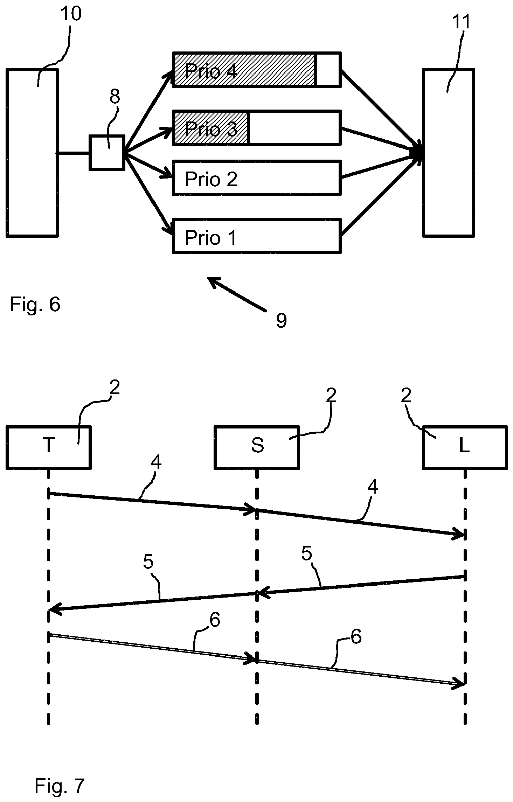

Ein weiteres Problem im Rahmen des bestehenden Ethernet-AVB-Standards stellen die zur Verfügung stehenden, begrenzten Ressourcen zur Weiterleitung von Datentelegramen in Switches bzw. deren Queues dar. So kann nur für eine gewisse Anzahl von Datenströmen eine hohe Priorität gewählt werden. Wenn diese ausgeschöpft ist, können keine weiteren Daten durch den Switch mit der geforderten Güte übertragen werden. Dies wird nachfolgend anhand von Fig. 6 erläutert, die die Funktionsweise eines Switches 9 vereinfacht darstellt.

Sobald ein Datenpaket 8 über den Eingangsport 10 des Switches 9 empfangen ist, wird entsprechend der mit dem Datenpaket 8 bzw. dem das Datenpaket 8 enthaltenden Datenstrom verbundene Güte (QoS, Quality of Services) überprüft, in welche Queue (Abarbeitungsstapel) des Switches 9 das Datenpaket 8 eingestellt wird. Im Rahmen des Ethernet-AVB-Standards, bei dem eine maximale Übertragungsdauer für ein Datenpaket verwendet wird, werden meist nur die beiden Queues mit der höchsten Priorität Prio4 und Prio3 verwendet, so dass die Switches anders als in dem beispielhaft dargestellten Fall häufig auch nur zwei Queues aufweisen. Auch im Falle mehrerer Queues werden die Queues niedrigerer Priorität (Prio1 und Prio2) meist nicht für eine Datenübertragung im Rahmen des Ethernet-AVB-Standards verwendet, sondern für allgemeine, zeitunkritische Datenübertragungen.

Die verschiedenen Prioritäten Prio1 bis Prio4 haben den Sinn, die Weiterleitung der Datenpakete entsprechend ihrer Wichtigkeit zu steuern. So werden die Queues Prio1 bis Prio4 nicht gleichzeitig oder gleichberechtigt nebeneinander behandelt, sondern die wichtigen Queues mit einer höheren Priorität werden bevorzugt behandelt. Datenpakete 8, die in die Queue mit der höchsten Priorität Prio 4 einsortiert sind, werden also schneller an den Ausgangsport 11 weitergeleitet als in niedrigeren Queues einsortierte Datenpakete 8.

Die hier dargestellte Anzahl von vier Queues ist beispielhaft gewählt und unterscheidet sich je nach Hersteller der Switches 9. Bei dem in Fig. 6 dargestellten Beispiel ist die Queue Prio 4 mit der höchsten Priorität schon nahezu vollständig belegt (gestrichelter Bereich), so dass kaum noch neue Daten aufgenommen werden können. Wenn die Queue mit der höchsten Priorität Prio 4 belegt ist, kann der Switch 9 Datenanfragen nicht mehr positiv beantworten, so dass es insgesamt zu einer Verzögerung bei der Übertragung von Daten dadurch kommen kann, dass Reservierungsanfragen 4 aufgrund der Queue-Belegung der Switches 9 negativ beantwortet werden.

Im Falle des im Hinblick auf Fig. 1 geschilderten Falles, in dem Daten von dem Sender T (Gerät A) zu den Empfängern L (Gerät I und Gerät K) übertragen und dort gleichzeitig verarbeitet werden sollen, werden gemäß dem herkömmlichen Ethernet-AVB-Standard unabhängig von der Entfernung der Kommunikationsverbindung die Datenpakete 8 aus dem Gerät A jeweils in die Queue mit der höchsten Priorität Prio4 eingeordnet, da diese als Daten nach dem AVB-Standard erkannt und damit in den Switches mit höchster Priorität behandelt werden.

Da für die Kommunikationsverbindung von Gerät A nach Gerät I, das unmittelbar an Gerät A angeschlossen ist, kaum eine zusätzliche Verzögerung durch Zwischenhaltung von Switches entsteht, ist die Verwendung der Priorität Prio4 mit der höchsten Queue überflüssig. Hierdurch werden Ressourcen verschenkt, die eventuell von anderen Datenströmen beispielsweise von Gerät H zu Gerät I benötigt würden, weil der Datenstrom in diesem Fall über eine sehr weite Strecke transportiert werden muss und die Queue mit der höchsten Priorität Prio4 zu wählen ist, um die maximale Verzögerung von 250 µs pro Knoten zu erreichen.

Mit dem aktuellen Ethernet-AVB-Standard lassen sich als Verwendungszeit alternativ nur 2 ms (Klasse A) oder 50 ms (Klasse B) einstellen. Dies bedeutet, dass die Datenpakete 8 den Empfänger L in vielen Fällen, insbesondere bei weniger als 7 Hops, schon erreicht haben, aber aufgrund der entsprechend dem Standard konservativ abgeschätzten Verwendungszeit (Presentation time) noch warten müssen, bis diese gültig werden. Gerade bei einem Einsatz in Kraftfahrzeugen, in denen häufig keine 7 Hops, sondern beispielsweise 3 Hops, für eine Datenübertragung zu erwarten sind, werden so Pakete immer zwischengespeichert werden müssen, wodurch zum einen sowohl Güteressourcen (QoS) verschwendet werden und andererseits unnötige Latenzen bei der Datenübertragung auftreten.

In Kommunikationsnetzwerken eines Fahrzeugs werden Datenströme, die eine gewisse Güte benötigen, meist in den Netzwerken MOST und FlexRay transportiert. Der neue Ethernet-AVB-Standard, der ebenso eine zeitlich definierte und synchronisierte Übertragung von Datenpaketen in Datenströmen erreicht, steht in Konkurrenz zu diesen beiden Netzwerken in Kraftfahrzeugen und sollte bei einem Einsatz in einem Kraftfahrzeug auch mindestens die Güteanforderungen bezüglich Latenzzeiten und Nachrichtenjitter für einen Datentransport unterstützen. Dies ist mit dem derzeit in Verwendung befindlichen Ethernet-AVB-Standard nicht möglich, der in erster Linie für die professionelle Audio/Video-Übertragungstechnik beispielsweise in Hi-Fi-Studios entwickelt wurde und deutlich geringere Anforderungen im Hinblick auf die Kosten der Speichermodule hat als eine Anwendung in Kraftfahrzeugen.

Die Verwendungszeit wird durch den Sender T auf Basis der Topologie des Kommunikationsnetzwerks 1 und/oder der Ressourcen der Kommunikationsverbindung angepasst wird. Auf Basis der Parameter der Topologie und der vorhandenen Ressourcen der Switches 9 zwischen dem Sender T und dem Empfänger S kann die Verwendungszeit über geeignete Parameter entsprechend angepasst werden. Auch wenn der Ethernet-AVB-Standard derzeit nur 2 Güteklassen (AVB-Klassen A und B) anbietet, schlägt die vorliegende Erfindung vor, nicht mehr an diese beiden Klassen gekoppelt zu sein, sondern individuelle Parameter anbieten zu können, die sich ggf. leicht auch in diesen Standard durchsetzen lassen, sofern aufbauend auf dem bestehenden Standard weitere Parameter eingeführt werden, die sämtliche beispielsweise in dem Kraftfahrzeug verbauten Netzwerkteilnehmer 2 aufweisen. Im Übrigen ließe sich auch eine Anpassung des Standards ohne weiteres erreichen, da lediglich zusätzliche Parameter angeboten werden, die nicht zwangsläufig genutzt werden müssen und daher auch mit älteren Geräten des Ethernet-AVB-Standards kompatibel wären.

Die Informationen zur Topologie und den Ressourcen der Switches dynamisch ermittelt oder statisch bekannt gemacht werden. Dies ist durch die im Standard befindlichen Protokolle bereits möglich.

Die vorgeschlagene Lösung ermöglicht es somit, den Ethernet-AVB-Standard und Netzwerkgerätekomponenten hierfür günstiger im Kraftfahrzeugbereich anbieten zu können, indem durch die an die jeweilige Kommunikationsverbindung (Route) und die aktuellen Queuezustände der Switches 9 angepassten Güteparameter helfen, teure Ressourcen, wie Speicherbausteine oder Prozessoren einzusparen bzw. zu minimieren. Weiterhin können die Latenzzeiten minimiert werden, da die Datenströme insgesamt schneller verarbeitet werden können. Beispielsweise ist es dann nicht mehr erforderlich, eine minimale Latenzzeit von 2 ms (minimale Verarbeitungszeit entsprechend der AVB-Klasse A) abzuwarten, bis die übertragenen Datenpakete gültig werden, denn durch die erfindungsgemäß vorgeschlagene Anpassung ist es möglich, die Kommunikationsverbindung so einzustellen, dass sie passend zum Verarbeitungszeitpunkt im Empfänger eintreffen und allenfalls für kurze Zeit zwischengespeichert werden müssen. Der übergeordneten Anwendung können somit mehr als zwei Güteklassen angeboten werden, so dass es einfacher ist, Echtzeitanwendungen mit dieser Netzwerktechnologie zu unterstützen.

Weiterhin hat die Anpassung der Güte Auswirkungen auf die gesamte Güte (QoS) der AVB-Wolke, die die Nutzung ungenutzter bzw. verschwendeter Ressourcen ermöglicht. Wird beispielsweise eine Queue mit einer höheren Priorität in einem Switch verwendet, so kann nach Abfrage der Topologieinformationen, d. h. insbesondere der Anzahl der Hops entlang der Kommunikationsverbindung, beispielsweise entschieden werden, eine langsamere Queue mit niedrigerer Priorität zu nutzen, falls diese für den angefragten Datenstrom ausreicht. Die höherwertige Queue bleibt für zeitkritischere Übertragungen offen und wird nicht so schnell verstopft.

Neben der Verwendungszeit (Presentation time) kann eine Dienstgüte-Klasse (Qos-Klasse) angeboten werden, die die derzeit vorhandenen AVB-Klassen A und B ggf. erweitert.

Die Verwendungszeit (Presentation time) greift als Parameter insbesondere auf die Topologie des Kommunikationsnetzwerks 1 zurück und wird maßgeblich durch die Anzahl der Hops entlang der Kommunikationsverbindung bestimmt, die notwendig sind, um Daten von einem Sender T zu einem Empfänger L zu transportieren. Durch den Parameter der Verwendungszeit wird unmittelbar Einfluss auf den notwendigen Speicher in dem Empfänger genommen, der durch eine entsprechend an die Länge der Kommunikationsverbindung angepasste Verwendungszeit erheblich reduziert werden kann, da längere Zwischenspeicherungen der Daten nicht notwendig sind.

Gegenüber einem Standard mit nur zwei garantierten Latenzen wird die Latenz durch die erfindungsgemäße Anpassung der Verweilzeit an die Topologie des Netzwerks auch verbessert, da nicht mehr die garantierte Übertragungszeit bis zur Weiterverarbeitung abgewartet werden muss.

Die Dienstgüteklasse hängt im Wesentlichen von den in den Switches verwendeten Queues ab, wobei sowohl die Anzahl der in dem Switch zur Verfügung stehenden Queues als auch die Auslastung der Queues (Queue-Zustand) bei der Bestimmung einer geeigneten Dienstgüteklasse für einen Datenstrom durch den Sender berücksichtigt werden kann. Hierdurch werden die Eigenschaften des für die Datenübertragung konkret genutzten Teils des Kommunikationsnetzwerks (beispielsweise der AVB-Wolke) besser ausgenutzt. Im Rahmen einer statischen Konfiguration kann allen Netzwerkteilnehmern 2 die Topologie des Kommunikationsnetzwerks 2 inklusive Kommunikationsverbindungen (Hop), Entfernung zu allen anderen Netzwerkteilnehmern 2, Speicherstände, fixe Datenströme und dessen Ressourcenverbrauch entweder bei der Programmierung oder beim jeweiligen Hochstart des Netzwerkes zur Verfügung gestellt werden. Hierfür können in den Netzwerkteilnehmern 2, insbesondere den als Sender T und Empfänger L dienenden Endknoten sowie den als Zwischenknoten dienenden Switches S, beispielsweise geeignete Tabellen angelegt werden, in denen die Informationen enthalten sind. Wird dann ein Datenstrom mit einer Dienstgütegarantie versendet, so können die Güte-Parameter auf Basis der in der Tabelle gespeicherten Informationen angepasst werden.

In Fig. 7 ist ein Beispiel eines dynamischen Einholens von Parametern entsprechend dem erfindungsgemäß vorgeschlagenen Verfahren dargestellt. In dem gemäß Fig. 7 beschriebenen Beispiel bietet ein als Sender T dienender Netzwerkknoten 2 einen Datenstrom mit einer bestimmten Dienstgütegarantie durch eine Reservierungsanfrage 4 an, die durch einen als Switch S dienenden Knoten 2 empfangen wird. Der Switch S, bzw. alle zwischen dem Sender T und dem Empfänger L liegenden Switches S, erweitern die in der Reservierungsanfrage 4 durch den Sender eingegebenen Parameter beispielsweise um den zurückgelegten Weg (durch Zählen der Hops oder dergleichen) und/oder um die bestehenden Reservierungen, welche die Ressourcen des Switches einschränken. Die so entsprechend erweiterten Reservierungsanfragen 4 gelangen zu dem Empfänger L, der den Empfang positiv bestätigt, sofern er den Datenstrom empfangen möchte und genügend Ressourcen für den Empfang und/oder die Verarbeitung zur Verfügung hat. Die durch die Informationen der Switches S ergänzten Reservierungsanfragen 4 sendet der Empfänger L, der ebenso ein Knoten 2 in dem Kommunikationsnetzwerk 1 ist, als Bestätigung 5 der Reservierungsanfrage 4 über die Switches S zurück zu dem Sender T, der aus den darin enthaltenen Informationen die tatsächliche Kommunikationsverbindung (Route, Weg) zu dem Empfänger L bestimmen und die Verwendungszeit entsprechen anpassen kann. Mit diesen angepassten Verwendungszeit erfolgt dann die Übertragung 6 des Datenstroms.

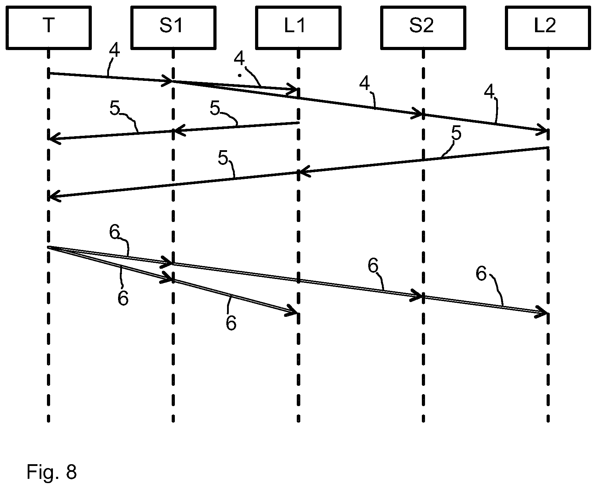

Im Rahmen der Erfindung sind auch komplexere Szenarien denkbar, in denen mehrere Empfänger L1, L2 den empfangenen Datenstrom synchron verarbeiten sollen. Hierbei erhält der Sender auf die Reservierungsanfragen 4 die jeweiligen um die Parameter der Switches ergänzten Bestätigungen 5 der beiden Empfänger L1 und L2 zurück und kann so zwei verschiedene Datenströme mit jeweils angepasster Verwendungszeit versenden, die vorzugsweise ungefähr gleichzeitig bei den Empfängern L1 und L2 eintreffen, so dass diese Daten ohne größere bzw. länger andauernde Zwischenspeicherung schnell verarbeitet werden können. Dies ist in Fig. 8 dargestellt.

Entsprechend der Darstellung in den Fig. 7 und 8 werden die Topologie und die Ressourcendaten der einzelnen Switches S bei dem Durchleiten der Reservierungsanfrage 4 und/oder der Bestätigungen 5 jeweils aktualisiert, so dass dem Sender T bei Aussenden des Datenstroms jeweils die dynamisch aktualisierten Parameter zur Verfügung stehen.

Die hierdurch verwirklichten Vorteile ergeben sich auch aus den nachfolgend dargestellten Tabellen 4 und 5, welche die entsprechend der Topologie und den Ressourcen angepasste Verarbeitungszeit auf die Latenzzeit zur Anwendung darstellt.

**Tabelle 4**

| Entfernung (Hops) | Verwendungszeit | Latenz zum Empfänger | Latenz zur Anwendung |
|---|---|---|---|
| 1 | 0,25 ms | 0,25 ms | 0,25 ms |
| 2 | 0,5 ms | 0,5 ms | 0,5 ms |
| 3 | 0,75 ms | 0,75 ms | 0,75 ms |
| 4 | 1 ms | 1 ms | 1 ms |
| 5 | 1,25 ms | 1,25 ms | 1,25 ms |
| 6 | 1,5 ms | 1,5 ms | 1,5 ms |
| 7 | 1,75 ms | 1,75 ms | 1,75 ms |
| 8 | 2 ms | 2 ms | 2 ms |

**Tabelle 5**

| Entfernung (Hops) | Verwendungszeit | Latenz zum Empfänger | Latenz zur Anwendung |
|---|---|---|---|
| 1 | 6,25 ms | 6,25 ms | 6,25 ms |
| 2 | 12,5 ms | 12,5 ms | 12,5 ms |
| 3 | 18,75 ms | 18,75 ms | 18,75 ms |
| 4 | 25 ms | 25 ms | 25 ms |
| 5 | 31,25 ms | 31,25 ms | 31,25 ms |
| 6 | 37,5 ms | 37,5 ms | 37,5 ms |
| 7 | 43,75 ms | 43,75 ms | 43,75 ms |
| 8 | 50 ms | 50 ms | 50 ms |

Im Vergleich zu den Tabellen 2 und 3 wird nun die Entfernung (als Summe der Hops) als Parameter für die Verweilzeit betrachtet, die ein Vielfaches der Basis der Übertragungszeit eines Hops (im Beispiel 0,25 ms) ausgelegt ist. Die Übertragungszeit zum jeweiligen Empfänger (Latenzzeit zum Empfänger) bleibt entsprechend der Entfernung zum Empfänger in Hops gleich. Jedoch wird durch die angepasste Verwendungszeit ein Datenpaket viel schneller verarbeitet, so dass eine minimale Latenz von 2 ms laut Standard auf beispielsweise ein Achtel verkürzt werden kann, wenn nur ein Hop zur Übertragung notwendig ist.

Entsprechendes ergibt sich aus der Tabelle 5 für die Latenzzeit der AVB-Klasse B.

Die Erfindung ist jedoch nicht auf die vorbeschriebenen Daten in der Tabelle beschränkt, da insbesondere weitere QoS-Klassen definiert werden können, die eine wesentlich feinere Abstimmung der Latenzen auf die Topologie und Ressourcen des Kommunikationsnetzwerks 1 erlaubt.

## Patentansprüche

1. Verfahren zur Übertragung von Daten in einem paketorientierten Kommunikationsnetzwerk (1) nach einem Ethernet-AVB-Standard IEEE 802.1BA mit einer garantierten maximalen Übertragungszeit der Datenpakete (8) in dem Kommunikationsnetzwerk (1) eines Kraftfahrzeugs, bei dem vor einer Datenübertragung (6) mittels einer Reservierungsanfrage (4) von dem Sender (2, T) der Daten zu einem Empfänger (2, L) der Daten eine gewisse Dienstgüte reserviert wird, wobei die Reservierungsanfrage (4) als Parameter der angeforderten Dienstgüte die Datenrate des Datenstroms und die Latenz umfasst und wobei bei einer Bestätigung (5) der Reservierungsanfrage (4) dem Datenstrom die angeforderte Dienstgüte für die Kommunikationsverbindung zwischen Sender (2, T) und Empfänger (2, L) in dem Netzwerk garantiert wird, **dadurch gekennzeichnet, dass** durch den Sender (2, T) auf Basis der Topologie des Kommunikationsnetzwerks (1) und/oder der Ressourcen der Kommunikationsverbindung als Parameter eine Verwendungszeit in einem Datenkopf der Datenpaketen angepasst wird, die angibt, ab wann die in dem Datenstrom über das Kommunikationsnetzwerk (1) übertragenen Daten in dem Empfänger (2, L) genutzt werden dürfen.

2. Verfahren nach Anspruch 1, wobei die Kommunikationsverbindung zwischen dem Sender (2, T) und dem Empfänger (2, L) über mindestens einen Switch (2, Sx) mittels jeweils eines Hops erfolgt, wobei ein Switch (2, Sx) den Datenstrom empfängt, entsprechend einer Priorisierung in eine Queue einstellt und beim Abarbeiten der Queue wieder aussendet, wobei der Switch (2, Sx) der Reservierungsanfrage (4) und/oder der Bestätigung (5) der Reservierungsanfrage (4) Informationen über die Topologie des Kommunikationsnetzwerks und/oder die Ressourcen des Switches (2, Sx) einfügt, wobei der Switch die Informationen über die Topologie des Kommunikationsnetzwerks und/oder die Ressourcen des Switches (2, Sx) mit der Bestätigung (5) der Reservierungsanfrage (4) an den Sender (2, T) übermittelt

3. Verfahren nach einem der vorhergehenden Ansprüche, wobei als Information über die Topologie des Kommunikationsnetzwerks die Anzahl der Hops entlang der Kommunikationsverbindung von dem Empfänger (2, L) zu dem Sender (2, T) angegeben wird.

4. Verfahren nach einem der vorhergehenden Ansprüche, wobei als Information über die Ressourcen der Kommunikationsverbindung ein Switch (2, Sx) entlang der Kommunikationsverbindung von dem Sender (2, T) zu dem Empfänger (2, L) eine Information über die Anzahl der für die Weiterleitung des Datenstroms verwendbaren Queues, deren nominaler Leistung und/oder den Queuestand weitergibt.

5. Verfahren nach einem der vorhergehenden Ansprüche, wobei die Topologie des Kommunikationsnetzwerks (1) dem Sender (2, T) und/oder dem Empfänger (2, L) des Kommunikationsnetzwerks (1) bei einer Programmierung und/oder bei einem Hochstart des Kommunikationsnetzwerks (1) zur Verfügung gestellt wird.

6. Verfahren nach einem der vorhergehenden Ansprüche, wobei dem Kommunikationsnetzwerk (1) eine zentrale Tabelle mit die Informationen über die Topologie des Kommunikationsnetzwerks (1) und/oder über die Ressourcen der Kommunikationsverbindung gehört, wobei Teilnehmergeräte (2) des Kommunikationsnetzwerks (1) die Informationen an die Tabelle übersenden und aus der Tabelle auslesen

7. Computerprogrammprodukt mit Programmcodemitteln, die dazu geeignet sind, bei Ausführung auf einem Sender und einem Empfänger dieser Sender und Empfänger zur Durchführung des Verfahrens nach einem der Ansprüche 1 bis 6 einzurichten.

8. Kommunikationsnetzwerk (1) eines Kraftfahrzeugs nach einem Ethernet-AVB-Standard IEEE 802.1BA mit einer garantierten maximalen Übertragungszeit der Datenpakete (8), umfassend:
- einen Sender (2, T);
- einen Empfänger (2, L)
- mindestens einen Switch (2, Sx) zwischen den Sender und Empfänger,
wobei der Sender geeignet ist, vor einer Datenübertragung (6) eine Reservierungsanfrage (4) zu übermitteln, wobei die Reservierungsanfrage (4) als Parameter der angeforderten Dienstgüte die Datenrate des Datenstroms und die Latenz umfasst,
wobei das Kommunikationsnetzwerk geeignet ist, bei einer Bestätigung (5) der Reservierungsanfrage (4) die angeforderte Dienstgüte für die Kommunikationsverbindung zwischen Sender (2, T) und Empfänger (2, L) zu garantieren, wobei der mindestens ein Switch (2, Sx) geeignet ist, den Datenstrom zu empfangen, entsprechend einer Priorisierung in eine Queue einzustellen und beim Abarbeiten der Queue wieder auszusenden,
**dadurch gekennzeichnet,**
**dass** der mindestens ein Switch (2, Sx) geeignet ist, der Reservierungsanfrage (4) und/oder der Bestätigung (5) der Reservierungsanfrage (4) Informationen über die Topologie des Kommunikationsnetzwerks und/oder die Ressourcen des Switches (2, Sx) einzufügen, wobei die Informationen über die Topologie des Kommunikationsnetzwerks und/oder die Ressourcen des Switches (2, Sx) mit der Bestätigung (5) der Reservierungsanfrage (4) an den Sender (2, T) übermittelt werden, und, dass der Sender (2, T) geeignet ist, auf Grundlage der übermittelten Informationen über die Topologie des Kommunikationsnetzwerks und/oder die Ressourcen des Switches (2, Sx) als Parameter eine Verwendungszeit in einem Datenkopf der Datenpakete anzupassen, die angibt, ab wann die in dem Datenstrom über das Kommunikationsnetzwerk (1) übertragenen Daten in dem Empfänger (2, L) genutzt werden dürfen.

## Claims

1. Method for transmitting data in a packet-oriented communications network (1) according to an Ethernet AVB standard IEEE 802.1BA with a guaranteed maximum transmission time for the data packets (8) in the communications network (1) of a motor vehicle, in which a certain quality of service is reserved, before data transmission (6), using a reservation request (4) from the sender (2, T) of the data to a recipient (2, L) of the data, the reservation request (4) comprising, as parameters of the requested quality of service, the data rate of the data stream and the latency, and the requested quality of service for the communication connection between the sender (2, T) and the recipient (2, L) in the network being guaranteed for the data stream in the event of a confirmation (5) of the reservation request (4), **characterized in that** a usage time in a data header of the data packets is adapted as the parameter by the sender (2, T) on the basis of the topology of the communications network (1) and/or the resources of the communication connection, which usage time indicates the time from which the data transmitted in the data stream via the communications network (1) can be used in the recipient (2, L).

2. Method according to Claim 1, wherein the communication connection between the sender (2, T) and the recipient (2, L) is effected via at least one switch (2, Sx) using a respective hop, a switch (2, Sx) receiving the data stream, placing it in a queue according to a prioritization and emitting it again when processing the queue, wherein the switch (2, Sx) inserts information relating to the topology of the communications network and/or the resources of the switch (2, Sx) into the reservation request (4) and/or into the confirmation (5) of the reservation request (4), wherein the switch transmits the information relating to the topology of the communications network and/or the resources of the switch (2, Sx) to the sender (2, T) with the confirmation (5) of the reservation request (4).

3. Method according to one of the preceding claims, wherein the number of hops along the communication connection from the recipient (2, L) to the sender (2, T) is indicated as information relating to the topology of the communications network.

4. Method according to one of the preceding claims, wherein a switch (2, Sx) along the communication connection from the sender (2, T) to the recipient (2, L) reproduces an item of information relating to the number of queues which can be used to forward the data stream, the nominal performance of the queues and/or the queue level as information relating to the resources of the communication connection.

5. Method according to one of the preceding claims, wherein the topology of the communications network (1) is made available to the sender (2, T) and/or the recipient (2, L) in the communications network (1) when programming and/or when starting up the communications network (1).

6. Method according to one of the preceding claims, wherein a central table containing the information relating to the topology of the communications network (1) and/or the resources of the communication connection belongs to the communications network (1), subscriber devices (2) in the communications network (1) transmitting the information to the table and reading it from the table.

7. Computer program product having program code means which, when executed on a sender and a recipient, are suitable for setting up this sender and this recipient to carry out the method according to one of Claims 1 to 6.

8. Communications network (1) of a motor vehicle according to an Ethernet AVB standard IEEE 802.1BA with a guaranteed maximum transmission time for the data packets (8), comprising:
- a sender (2, T);
- a recipient (2, L)
- at least one switch (2, Sx) between the sender and the recipient,
wherein the sender is suitable for transmitting a reservation request (4) before data transmission (6), the reservation request (4) comprising, as parameters of the requested quality of service, the data rate of the data stream and the latency, wherein the communications network is suitable for guaranteeing the requested quality of service for the communication connection between the sender (2, T) and the recipient (2, L) in the event of a confirmation (5) of the reservation request (4), wherein the at least one switch (2, Sx) is suitable for receiving the data stream, placing it in a queue according to a prioritization and emitting it again when processing the queue,
**characterized**
**in that** the at least one switch (2, Sx) is suitable for inserting information relating to the topology of the communications network and/or the resources of the switch (2, Sx) into the reservation request (4) and/or into the confirmation (5) of the reservation request (4), wherein the information relating to the topology of the communications network and/or the resources of the switch (2, Sx) is transmitted to the sender (2, T) with the confirmation (5) of the reservation request (4), and
**in that** the sender (2, T) is suitable for adapting a usage time in a data header of the data packets as the parameter on the basis of the transmitted information relating to the topology of the communications network and/or the resources of the switch (2, Sx), which usage time indicates the time from which the data transmitted in the data stream via the communications network (1) can be used in the recipient (2, L).

## Revendications

1. Procédé de transmission de données dans un réseau de communication orienté paquets (1) selon une norme Ethernet AVB IEEE 802.1BA ayant un temps de transmission maximal garanti des paquets de données (8) dans le réseau de communication (1) d'un véhicule automobile, dans lequel, avant une transmission de données (6), une certaine qualité de service est réservée au moyen d'une demande de réservation (4) de l'émetteur (2, T) des données à un récepteur (2, L) des données, la demande de réservation (4) comprenant en tant que paramètres de la qualité de service demandée le débit de données du flux de données et le temps de latence, et dans lequel, lors d'une confirmation (5) de la demande de réservation (4), la qualité de service demandée est garantie au flux de données pour la liaison de communication entre l'émetteur (2, T) et le récepteur (2, L) dans le réseau, **caractérisé en ce que** sur la base de la topologie du réseau de communication (1) et/ou des ressources de la liaison de communication, l'émetteur (2, T) ajuste en tant que paramètre un temps d'utilisation dans un en-tête de données des paquets de données qui indique à partir de quand les données transmises dans le flux de données sur le réseau de communication (1) peuvent être utilisées dans le récepteur (2, L).

2. Procédé selon la revendication 1, dans lequel la liaison de communication entre l'émetteur (2, T) et le récepteur (2, L) est effectuée par au moins un commutateur (2, Sx) au moyen d'un saut respectivement, dans lequel un commutateur (2, Sx) reçoit le flux de données, le place dans une file d'attente selon un ordre de priorité et le retransmet lors du traitement de la file d'attente, dans lequel le commutateur (2, Sx) insère dans la demande de réservation (4) et/ou dans la confirmation (5) de la demande de réservation (4) des informations concernant la topologie du réseau de communication et/ou les ressources du commutateur (2, Sx), dans lequel le commutateur transmet des informations concernant la topologie du réseau de communication et/ou les ressources du commutateur (2, Sx) avec la confirmation (5) de la demande de réservation (4) à l'émetteur (2, T).

3. Procédé selon l'une quelconque des revendications précédentes, dans lequel le nombre des sauts le long de la liaison de communication du récepteur (2, L) à l'émetteur (2, T) est indiqué en tant qu'information concernant la topologie du réseau de communication.

4. Procédé selon l'une quelconque des revendications précédentes, dans lequel en tant qu'informations concernant les ressources de la liaison de communication, un commutateur (2, Sx) le long de la liaison de communication de l'émetteur (2, T) au récepteur (2, L) retransmet une information concernant le nombre des files d'attente utilisables pour la retransmission du flux de données, leur puissance nominale et/ou l'état de la file d'attente.

5. Procédé selon l'une quelconque des revendications précédentes, dans lequel la topologie du réseau de communication (1) est mise à la disposition de l'émetteur (2, T) et/ou du récepteur (2, L) du réseau de communication (1) en cas de programmation et/ou d'un démarrage du réseau de communication (1).

6. Procédé selon l'une quelconque des revendications précédentes, dans lequel le réseau de communication (1) dispose d'une table centrale comprenant les informations concernant la topologie du réseau de communication (1) et/ou les ressources de la liaison de communication, les appareils d'abonné (2) du réseau de communications (1) envoyant les informations à la table et les consultant dans la table.

7. Produit de programme informatique comprenant des moyens de code programme qui sont adaptés, lorsqu'ils sont exécutés sur un émetteur et un récepteur, pour configurer cet émetteur et ce récepteur en vue de l'exécution du procédé selon l'une quelconque des revendications 1 à 6.

8. Réseau de communication (1) d'un véhicule automobile selon une norme Ethernet AVB IEEE 802.1BA ayant un temps de transmission maximal garanti des paquets de données (8), comprenant :
- un émetteur (2, T) ;
- un récepteur (2, L) ;
- au moins un commutateur (2, Sx) entre l'émetteur et le récepteur,
l'émetteur étant adapté pour transmettre une demande de réservation (4) avant une transmission de données (6), la demande de réservation (4) comprenant en tant que paramètres la qualité de service demandée, le débit de données du flux de données et le temps de latence,
le réseau de communication étant adapté, lors d'une confirmation (5) de la demande de réservation (4), pour garantir la qualité de service demandée pour la liaison de communication entre l'émetteur (2, T) et le récepteur (2, L), ledit au moins un commutateur (2, Sx) étant adapté pour recevoir le flux de données, le placer dans une file d'attente selon un ordre de priorité et de le retransmettre lors du traitement de la file d'attente,
**caractérisé en ce que** ledit au moins un commutateur (2, Sx) est adapté pour insérer dans la demande de réservation (4) et/ou dans la confirmation (5) de la demande de réservation (4) des informations concernant la topologie du réseau de communication et/ou les ressources du commutateur (2, Sx), les informations concernant la topologie du réseau de communication et/ou les ressources du commutateur (2, Sx) étant transmises avec la confirmation (5) de la demande de réservation (4) à l'émetteur (2, T), et **en ce que** l'émetteur (2, T) est adapté, sur la base des informations transmises concernant la topologie du réseau de communications et/ou les ressources du commutateur (2, Sx), pour ajuster en tant que paramètre un temps d'utilisation dans un en-tête de données des paquets de données qui indique à partir de quand les données transmises dans le flux de données sur le réseau de communication (1) peuvent être utilisées dans le récepteur (2, L).
